# EUROPEAN PATENT APPLICATION

(11) **EP 1 627 701 A1**
(43) Date of publication of application: **22.02.2006**
(21) Application number: 05107152.0
(22) Date of filing: 03.08.2005
(51) Int. Cl.: B23B 31/12

(54) **Lockable chuck**

(30) Priority: 03.08.2004 CN 200420052819 U
(71) Applicant: Shandong Weida Machinery Co., Ltd, Wendeng City, Shandong Province 264414 (CN)
(72) Inventor: Yang, Guimo, 264414 Shandong Province (CN); Qiao, Wenzhang, 264414 Shandong Province (CN)
(74) Representative: Molnia, David

(57) **Abstract**

A locking chuck is provided with arms (50) that extend from the adjustment mechanism to a locking ring (34). The arms are biased against the teeth (38) of the locking ring (34). As the outer sleeve is rotated in the tightening direction, rearward axial force is applied to the locking ring (34), thereby locking the locking ring against the body (12) of the chuck. When the outer sleeve (46) is rotated in the loosening direction, the arms rotate the locking ring to unlock the locking ring from the body.

## Description

### BACKGROUND

The present invention relates generally to chucks and more particularly to a chuck that may be locked to the shaft of a work tool.

Chucks are well known and are used in many applications. In general, a chuck is connected to the rotating shaft of a power tool. One common example of the type of power tool that a chuck may be used on is an electric drill. However, chucks are also used on many other tools, such as screw drivers, nut drivers and grinders―any of which may be pneumatic, electric, manual or otherwise powered. A chuck is generally used to grip the shaft of a work tool so that the work tool rotates with the shaft of the power tool at the same speed. Typical types of work tools that are used with a chuck include drill bits, screwdriver bits and grinding disks or stones.

A wide variety of chucks have been developed. The most common type of chuck employed uses three jaws to grip the shaft of a work tool. These types of chucks are able to securely grip shafts with both round and polygonal cross-sections. Typically, the jaws move towards each other in a smaller diametrical relationship as the chuck is tightened and move away from each other in a larger diametrical relationship as the chuck is loosened. Most chucks are designed so that the jaws have a relatively large range of movement. This allows a single chuck to grip many different work tools with different sized shafts.

Typically, a chuck also has an adjustment mechanism that the user rotates in order to tighten and loosen the jaws. Many different types of adjustment mechanisms are possible, but in most chucks an outer sleeve or ring is used which rotates a nut that is threaded to the jaws. Commonly, an outer sleeve is used that the user may operate by hand. Thus, when the user rotates the outer sleeve in one direction, the jaws will move towards each other in a tightening direction. On the other hand, when the user rotates the outer sleeve in the opposite direction, the jaws will move away from each other in a loosening direction. Other types of engagement structures have also been used as well. For example, a key may also be used. In this example, the key engages a gear on a ring while being radially fixed to the body of the chuck. As a result, the ring rotates and moves the jaws as the user rotates the key, thereby providing the user with increased leverage.

One important design consideration is that the chuck must not be allowed to inadvertently loosen after the user has tightened the chuck onto the shaft of a work tool. Often loosening of the chuck may occur during use of the power tool due to various vibrations that cause the adjustment mechanism to rotate by itself in the loosening direction. Typically, this occurs when insufficient tightening torque has been applied to the adjustment mechanism. This can be particularly annoying and inconvenient for the user if the chuck loosens during use of the power tool. When this occurs, the chuck will typically spin around the shaft of the work tool without transmitting the torque of the power tool to the work tool. As a result, the work tool stops rotating and the power tool and the chuck simply spin without accomplishing any work. In the case of chucks that are tightened by hand without using a key or other tool, this can be of particular concern in the design of a chuck since it can be more difficult for users to apply enough torque to sufficiently tighten the chuck to avoid loosening. It is also more difficult for users of hand tightened chucks to recognize when the chuck as been tightened sufficiently.

Accordingly, chucks that may be locked once they have been tightened are particularly desirable.

### BRIEF SUMMARY

A chuck is described that may be locked to prevent inadvertent loosening of the adjustment mechanism. The chuck has flexible arms that extend from the adjustment mechanism to a locking ring. The locking ring is rotatably mounted on the body of the chuck and is frictionally locked to the body when the chuck is tightened.

### BRIEF DESCRIPTION OF SEVERAL VIEWS OF THE DRAWINGS

The invention may be more fully understood by reading the following description in conjunction with the drawings, in which:
Figure 1 is an exploded, perspective view of an embodiment of a chuck;
Figure 2 is a rear elevational view of a locking ring of the chuck;
Figure 3 is a rear elevational view of a locking ring of another embodiment of a chuck; and
Figure 4 is a rear elevational view of the inside of an outer sleeve of the chucks.

### DETAILED DESCRIPTION

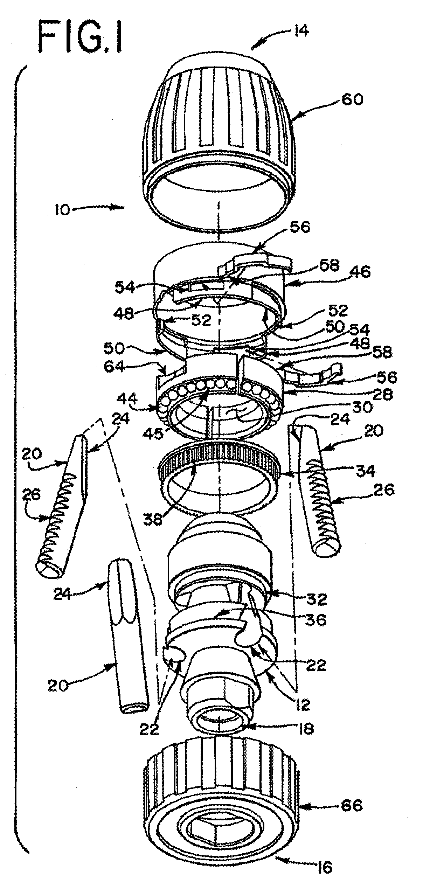

Referring now to the drawings, and particularly to Figure 1, one embodiment of a lockable chuck 10 is shown. In a conventional manner, the chuck 10 includes a chuck body 12 with a front end 14 and a rear end 16. The rear end 16 of the chuck body 12 has an internally threaded bore 18 to allow the chuck 10 to be connected to the drive shaft of a power tool. As is well known in the art, chucks may be used with a variety of power tools, such as pneumatic, electric, manual and other types of power tools. Generally speaking, the purpose of the chuck 10 is to transmit the operational force of a power tool to a work tool, such as a drill bit, screwdriver bit, or a grinding disk or stone. The chuck 10 also provides a convenient mechanism to change work tools connected to the power tool so that the power tool can be easily used with many different types and sizes of work tools.

The chuck 10 also includes three jaws 20 mounted within corresponding angular bores 22 extending through the body 12. The bores 22 are angled from the longitudinal axis of the body 12 so that the front ends of the jaws 20 are angled toward each other and the rear ends of the jaws 20 are angled away from the other jaws 20. Jaw faces 24 are provided along the inside surfaces of the front ends of each of the jaws 20. Threads 26 are provided along the outside surfaces of the rear ends of each of the jaws 20. An adjustment ring 28 is also provided with inner threads 30 that correspond to the threads 26 on the jaws 20. In the example shown in Figure 1, the adjustment ring 28 is shown as a two-piece ring 28. One advantage of the described embodiment is that the two-piece adjustment ring 28 may be easily installed within a groove 32 in the body 12, which axially retains the adjustment ring 28. The ring sleeve 46 described below may then be pressed over the two-piece adjustment ring 28 to hold the ring 28 together. However, other embodiments may also be used such as using a single-piece adjustment ring instead of a two-piece adjustment ring.

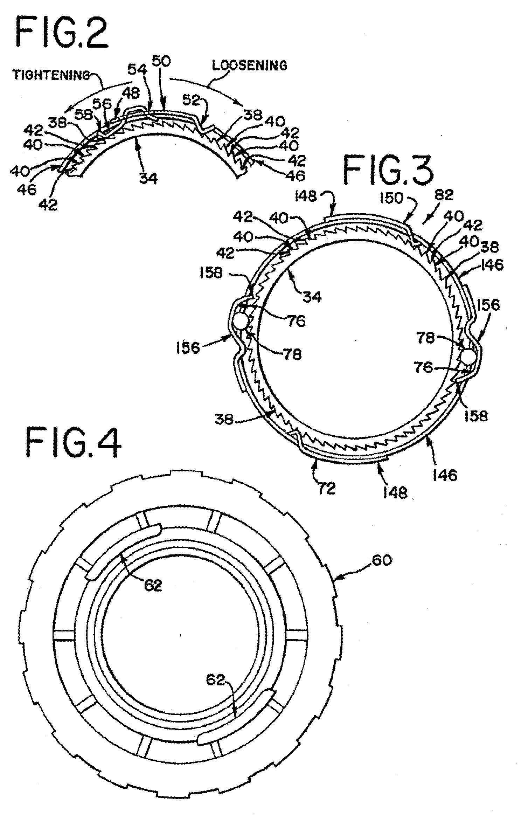

A locking ring 34 is also mounted on the chuck body 12 rearward of the adjustment ring 28. The locking ring 34 is installed between the adjustment ring 28 and a rear face 36 of the body 12. The locking ring 34 includes a plurality of external teeth 38 that extend around the circumference of the locking ring 34. Preferably, as shown in Figure 2, the teeth 38 of the locking ring 34 are slanted so that the long face 40 of each tooth 38 faces in the loosening direction and the short face 42 of each tooth 38 faces in the tightening direction. A bearing 44 is also provided between the locking ring 34 and the adjustment ring 28 to allow relative motion therebetween. Preferably, the bearing 44 is made up of a series of steel balls 45, such as thirty-three steel balls 45.

A ring sleeve 46 is mounted about the adjustment ring 28 and is rigidly fixed thereto by press fitting the ring sleeve 46 onto the adjustment ring 28. Along the rear end of the ring sleeve 46, two retainer portions 48 extend rearward therefrom and extend over the teeth 38 of the locking ring 34. Formed integrally with each of the retainer portions 48 and the ring sleeve 46 is an arm 50 that extends circumferentially from each of the retainer portions 48 along the loosening direction of the chuck 10. The arms 50 are flexible and are preferably made of spring metal. At the end of each arm 50, an engagement portion 52 is provided which contacts the teeth 38 of the locking ring 34. The shape of the engagement portion 52 may vary, but as shown in Figure 2, a curved portion 52 may be used. Each of the retainer portions 48 also have a slot 54 extending therethrough. Installed within each of the slots 54 is a spring member 56. Preferably, the spring members 56 are made from spring metal. Each of the spring members 56 are retained by the slots 54 and extend along the tightening direction. The spring members 56 are biased between the retainer portions 48 and the teeth 38 of the locking ring 34 and engage the teeth 38 with curved engagement portions 58.

An outer sleeve 60 is also provided and is mounted about the adjustment ring 28 and the locking ring 34. As shown in Figure 4, the outer sleeve allows the user to loosen and tighten the chuck 10 by hand by grasping the outer sleeve 60 and rotating the outer sleeve 60 relative to the chuck body 12. The outer sleeve 60 is rotationally fixed to the adjustment ring 28 with drive ribs 62 inside of the outer sleeve 60 that are received by corresponding drive slots 64 in the adjustment ring 28. The outer sleeve 60 is axially retained on the chuck 10 by an internal snap ring (not shown) or any other suitable manner. A rear sleeve 66 is also provided which is rigidly fixed to the chuck body 12. The rear sleeve 66 enables the user to prevent rotation of the chuck body 12 by grasping the rear sleeve 66 while the user rotates the outer sleeve 60 to loosen or tighten the chuck 10. However, where the power tool has a lockable drive shaft that can be used to prevent rotation of the chuck body 12, the rear sleeve 66 may be eliminated from these applications.

The operation of the described chuck 10 is now apparent. The user loosens and tightens the jaws 20 of the chuck 10 onto the shaft of a work tool by rotating the outer sleeve 60 of the chuck 10 relative to the chuck body 12. As shown in Figure 2, when viewed from the rear end 16 of the chuck 10, the jaws 20 of the chuck 10 are loosened when the outer sleeve 60 is rotated clockwise. Similarly, the jaws 20 are tightened when the outer sleeve 60 is rotated counterclockwise as viewed from the rear end 16. This arrangement however could be reversed if desired. The adjustment sleeve 28 rotates with the outer sleeve 60 since the outer sleeve 60 and the adjustment sleeve 28 are connected through the drive ribs 62 of the outer sleeve 60 and the drive slots 64 of the adjustment sleeve 28. As a result, the threaded engagement 26, 30 between the adjustment ring 28 and the jaws 20 cause the jaws 20 to move rearward and forward through the angled bores 22 extending through the chuck body 12. Thus, when the outer sleeve 60 is rotated in the loosening direction, the jaws 20 move away from each other thereby defining a larger diametrical relationship. When the outer sleeve 60 is rotated in the tightening direction, the jaws 20 move toward each other thereby defining a smaller diametrical relationship.

When the jaws 20 of the chuck 10 are loose (i.e., not gripping the shank of a work tool or tightly abutting each other), the engagement portions 52, 58 of the arms 50 and spring members 56 contact the teeth 38 of the locking ring 34 and cause the locking ring 34 to rotate with the adjustment ring 28. However, as the jaws 20 are tightened (either on a work tool shaft or by tightening the jaws 20 against each other), a rearward axial force is applied from the jaws 20 to the adjustment ring 28 through the threads 26 of the jaws 20 and the threads 30 of the adjustment ring 28. As a result, the adjustment ring 28 is forced rearward, thereby applying a rearward axial force against the locking ring 34 through the bearing 44. This causes a frictional resistance force to develop between the locking ring 34 and the rear face 36 of the chuck body 12. At a particular predetermined tightening torque, the locking ring 34 becomes frictionally locked to the rear face 36 of the chuck body 12. However, at this point, the adjustment ring 28 may still be rotated to a certain degree relative to the chuck body 12 and the locking ring 34 in order to further tighten the jaws 20. As the jaws 20 are further tightened by rotating the adjustment ring 28, the engagement portions 52, 58 of the arms 50 and the spring members 56 ride over the long faces 40 of the teeth 38 on the locking ring 34. This produces an audible click as the engagement portions 52, 58 ride over the teeth 38 which the user may use as an indication that the chuck 10 has been sufficiently tightened.

To loosen the jaws 20 of the chuck 10, the outer sleeve 60 is rotated in the opposite direction in the loosening direction. Because the locking ring 34 is frictionally locked to the rear face 36 of the chuck body 12, a predetermined loosening torque must be applied before the adjustment sleeve 28 will rotate in the loosening direction. Once sufficient torque is applied to overcome the friction between the locking ring 34 and the rear face 36 of the chuck body 12, the contact between the engagement portions 52, 58 of the arms 50 and the spring members 56 cause the adjustment ring 28 and the locking ring 34 to rotate together in the loosening direction.

An alternative design for the arms 50 and the spring members 56 described above is shown in Figure 3. The features and operation of the alternative design shown in Figure 3 are substantially the same as described above. Therefore, only the features and operation that are different from the description above will be described. In this alternative, the spring members 156 are not biased between the retainer portions 148 of the arms 150 as was described above. Instead, the spring members 156 are separately attached to the ring sleeve 146 ninety degrees from the arms 150. Preferably, the spring members 156 are made of spring metal and are integrally formed as a part of the ring sleeve 146 like the flexible arms 150. Each of the spring members 156 are formed with a cavity 76 between the spring member 156 and the teeth 38 of the locking ring 34. A ball 78 is installed underneath each of the spring members 156 within the cavity 76. The end 158 of the spring member 156 is bent down toward the teeth 38 of the locking ring 34 to trap the ball 78 underneath the spring members 156. The flexible arm 150 is substantially the same as the arm 50 described above except that the slot 54 extending through the retainer portion 48 can be eliminated from this design.

The alternative design of Figure 3 operates similarly to the chuck 10 described above. However, when the chuck 82 is tightened and the locking ring 34 becomes locked to the rear face 36 of the chuck body 12, the balls 78 are forced to ride over the teeth 38 of the locking ring 34 by the spring members 156. This causes the spring members 156 to audibly click and may provide a different audible characteristic than the chuck 10 described.

While preferred embodiments of the invention have been described, it should be understood that the invention is not so limited, and modifications may be made without departing from the invention. The scope of the invention is defined by the appended claims, and all devices that come within the meaning of the claims, either literally or by equivalence, are intended to be embraced therein.

## Claims

1. A lockable chuck for use with a power tool having a drive shaft, comprising:
a body comprising a rear end adapted to be connected to the drive shaft of a power tool and a forward end adapted to receive a shaft of a work tool;
a plurality of jaws disposed within said forward end of said body, said jaws being moveable between a smaller diametrical relationship defined by said jaws and a larger diametrical relationship defined by said jaws, wherein said jaws are adapted to grip said shaft of said work tool whereby said body and said jaws transmit force from said power tool to said work tool;
an adjustment ring rotationally mounted about said body and operably engaged with said jaws, said adjustment ring being rotatable in a tightening direction wherein said jaws move toward said smaller diametrical relationship and being rotatable in a loosening direction wherein said jaws move toward said larger diametrical relationship;
a locking ring rotationally mounted about said body, said locking ring being disposed between said adjustment ring and a face of said body, wherein said locking member comprises a plurality of teeth thereon;
an arm attached to said adjustment ring and extending therefrom to said locking ring, said arm comprising an engagement portion contacting said teeth of said locking ring,
wherein said arm is flexible;
wherein upon a predetermined tightening torque applied to said adjustment ring said locking ring frictionally locks against said face of said body, said adjustment ring rotating relative to said locking ring in said tightening direction and said engagement portion of said arm riding over said teeth of said locking member; and
wherein upon a predetermined loosening torque applied to said adjustment ring said locking ring frictionally unlocks from said face of said body, said engagement portion of said arm locking to said teeth of said locking ring and said locking ring rotating together with said adjustment ring.

2. The chuck according to claim 1, further comprising a bearing disposed between said adjustment ring and said locking ring.

3. The chuck according to claim 1, further comprising a ring sleeve attached to and disposed about said adjustment sleeve, wherein said arm extends from said ring sleeve and is formed integrally therewith.

4. The chuck according to claim 1, wherein said adjustment ring is formed by two separate halves and is axially retained within a groove in said body, and further comprising a ring sleeve attached to and disposed about said adjustment sleeve, said ring sleeve holding said two separate halves of said adjustment sleeve together, wherein said arm extends from said ring sleeve and is formed integrally therewith.

5. The chuck according to claim 1, further comprising at least two of said arms.

6. The chuck according to claim 1, further comprising a retainer portion attached to said adjustment ring and extending over said locking ring, and a spring member disposed between said retainer portion and said teeth of said locking ring, said spring member being biased between said retainer portion and said teeth and engaging said teeth.

7. The chuck according to claim 1, further comprising at least two of said arms, wherein each arm is attached to said adjustment ring through a retainer portion attached to said adjustment ring and extending over said locking ring, said arms extending from said retainer portions, and a spring member disposed between each of said retainer portions and said teeth of said locking ring, said spring members being biased between said retainer portions and said teeth and engaging said teeth.

8. The chuck according to claim 1, further comprising a spring member attached to said adjustment ring and extending over said locking ring, and a ball entrapped by said spring member, said ball being disposed between said spring member and said teeth of said locking ring.

9. The chuck according to claim 1, further comprising at least two of said arms, at least two spring members attached to said adjustment ring and extending over said locking ring, and a ball entrapped by each of said spring members, said balls being disposed between said spring members and said teeth of said locking ring.

10. The chuck according to claim 1, wherein said teeth of said locking ring are slanted and are each formed by a long face and a short face, said long faces of said teeth facing toward said loosening direction and said short faces of said teeth facing toward said tightening direction.

11. The chuck according to claim 1, further comprising an outer sleeve disposed about said adjustment ring and said locking ring, said sleeve having a drive rib received in a drive slot of said adjustment ring.

12. The chuck according to claim 1, further comprising a bearing disposed between said adjustment ring and said locking ring, a retainer portion attached to said adjustment ring and extending over said locking ring, and a spring member disposed between said retainer portion and said teeth of said locking ring, said spring member being biased between said retainer portion and said teeth and engaging said teeth, wherein said teeth of said locking ring are slanted and are each formed by a long face and a short face, said long faces of said teeth facing toward said loosening direction and said short faces of said teeth facing toward said tightening direction.

13. The chuck according to claim 12, further comprising a ring sleeve attached to and disposed about said adjustment sleeve, wherein said arm extends from said ring sleeve and is formed integrally therewith, and an outer sleeve disposed about said adjustment ring and said locking ring, said sleeve having a drive rib received in a drive slot of said adjustment ring.

14. The chuck according to claim 13, further comprising at least two of said arms, wherein each arm is attached to said adjustment ring through a retainer portion attached to said adjustment ring and extending over said locking ring, said arms extending from said retainer portions, and a spring member disposed between each of said retainer portions and said teeth of said locking ring, said spring members being biased between said retainer portions and said teeth and engaging said teeth, wherein said adjustment ring is formed by two separate halves and is axially retained within a groove in said body, said ring sleeve holding said two separate halves of said adjustment sleeve together, wherein said arms extend from said ring sleeve and are formed integrally therewith.

15. The chuck according to claim 1, further comprising a spring member attached to said adjustment ring and extending over said locking ring, and a ball entrapped by said spring member, said ball being disposed between said spring member and said teeth of said locking ring, wherein said teeth of said locking ring are slanted and are each formed by a long face and a short face, said long faces of said teeth facing toward said loosening direction and said short faces of said teeth facing toward said tightening direction.

16. The chuck according to claim 15, further comprising a bearing disposed between said adjustment ring and said locking ring, and a ring sleeve attached to and disposed about said adjustment sleeve, wherein said arm extends from said ring sleeve and is formed integrally therewith, and an outer sleeve disposed about said adjustment ring and said locking ring, said sleeve having a drive rib received in a drive slot of said adjustment ring.

17. The chuck according to claim 16, further comprising at least two of said arms, at least two spring members attached to said adjustment ring and extending over said locking ring, and a ball entrapped by each of said spring members, said balls being disposed between said spring members and said teeth of said locking ring, wherein said adjustment ring is formed by two separate halves and is axially retained within a groove in said body, said ring sleeve holding said two separate halves of said adjustment sleeve together, wherein said arms extend from said ring sleeve and are formed integrally therewith.

18. A lockable chuck for use with a power tool having a drive shaft, comprising:
a body comprising a rear end adapted to be connected to the drive shaft of a power tool and a forward end adapted to receive a shaft of a work tool;
a plurality of jaws disposed within said forward end of said body and extending angularly from a longitudinal axis of said body, front ends of each of said jaws thereby being angled toward the other jaws, said jaws comprising jaw faces on inside surfaces of said front ends and threads being formed on outside surfaces of rear ends of each of said jaws;
an adjustment ring rotationally mounted about said body and threadably engaged with said jaws;
a locking ring rotationally mounted about said body, said locking ring being disposed rearward from said adjustment ring and against a face of said body, wherein said locking member comprises a plurality of external teeth thereon; and
an arm attached to said adjustment ring and extending rearward therefrom to said locking ring, said arm comprising an engagement portion contacting said teeth of said locking ring, wherein said arm is flexible.

19. The chuck according to claim 18, further comprising a ring sleeve attached to and disposed about said adjustment sleeve, wherein said arm extends from said ring sleeve and is formed integrally therewith.

20. The chuck according to claim 18, wherein said adjustment ring is formed by two separate halves and is axially retained within a groove in said body, and further comprising a ring sleeve attached to and disposed about said adjustment sleeve, said ring sleeve holding said two separate halves of said adjustment sleeve together, wherein said arm extends from said ring sleeve and is formed integrally therewith.

21. The chuck according to claim 18, further comprising at least two of said arms.

22. The chuck according to claim 18, further comprising a retainer portion attached to said adjustment ring and extending over said locking ring, and a spring member disposed between said retainer portion and said teeth of said locking ring, said spring member being biased between said retainer portion and said teeth and engaging said teeth.

23. The chuck according to claim 18, further comprising at least two of said arms, wherein each arm is attached to said adjustment ring through a retainer portion attached to said adjustment ring and extending over said locking ring, said arms extending from said retainer portions, and a spring member disposed between each of said retainer portions and said teeth of said locking ring, said spring members being biased between said retainer portions and said teeth and engaging said teeth.

24. The chuck according to claim 18, further comprising a spring member attached to said adjustment ring and extending over said locking ring, and a ball entrapped by said spring member, said ball being disposed between said spring member and said teeth of said locking ring.

25. The chuck according to claim 18, further comprising at least two of said arms, at least two spring members attached to said adjustment ring and extending over said locking ring, and a ball entrapped by each of said spring members, said balls being disposed between said spring members and said teeth of said locking ring.

26. The chuck according to claim 18, wherein said teeth of said locking ring are slanted and are each formed by a long face and a short face, said long faces of said teeth facing toward a loosening direction and said short faces of said teeth facing toward a tightening direction.

27. The chuck according to claim 18, further comprising an outer sleeve disposed about said adjustment ring and said locking ring, said sleeve having a drive rib received in a drive slot of said adjustment ring.

28. The chuck according to claim 18, further comprising a bearing disposed between said adjustment ring and said locking ring.

29. The chuck according to claim 18, further comprising a bearing disposed between said adjustment ring and said locking ring, a retainer portion attached to said adjustment ring and extending over said locking ring, and a spring member disposed between said retainer portion and said teeth of said locking ring, said spring member being biased between said retainer portion and said teeth and engaging said teeth, wherein said teeth of said locking ring are slanted and are each formed by a long face and a short face, said long faces of said teeth facing toward a loosening direction and said short faces of said teeth facing toward a tightening direction.

30. The chuck according to claim 29, further comprising a ring sleeve attached to and disposed about said adjustment sleeve, wherein said arm extends from said ring sleeve and is formed integrally therewith, and an outer sleeve disposed about said adjustment ring and said locking ring, said sleeve having a drive rib received in a drive slot of said adjustment ring.

31. The chuck according to claim 30, further comprising at least two of said arms, wherein each arm is attached to said adjustment ring through a retainer portion attached to said adjustment ring and extending over said locking ring, said arms extending from said retainer portions, and a spring member disposed between each of said retainer portions and said teeth of said locking ring, said spring members being biased between said retainer portions and said teeth and engaging said teeth, wherein said adjustment ring is formed by two separate halves and is axially retained within a groove in said body, said ring sleeve holding said two separate halves of said adjustment sleeve together, wherein said arms extend from said ring sleeve and are formed integrally therewith.

32. The chuck according to claim 18, further comprising a bearing disposed between said adjustment ring and said locking ring, a spring member attached to said adjustment ring and extending over said locking ring, and a ball entrapped by said spring member, said ball being disposed between said spring member and said teeth of said locking ring, wherein said teeth of said locking ring are slanted and are each formed by a long face and a short face, said long faces of said teeth facing toward a loosening direction and said short faces of said teeth facing toward a tightening direction.

33. The chuck according to claim 32, further comprising a ring sleeve attached to and disposed about said adjustment sleeve, wherein said arm extends from said ring sleeve and is formed integrally therewith, and an outer sleeve disposed about said adjustment ring and said locking ring, said sleeve having a drive rib received in a drive slot of said adjustment ring.

34. The chuck according to claim 33, further comprising at least two of said arms, at least two spring members attached to said adjustment ring and extending over said locking ring, and a ball entrapped by each of said spring members, said balls being disposed between said spring members and said teeth of said locking ring, wherein said adjustment ring is formed by two separate halves and is axially retained within a groove in said body, said ring sleeve holding said two separate halves of said adjustment sleeve together, wherein said arms extend from said ring sleeve and are formed integrally therewith.
